# DEMANDE DE BREVET EUROPEEN

(11) **EP 3 686 977 A1**
(43) Date de publication de la demande: **29.07.2020**
(21) Numéro de dépôt: 20153229.8
(22) Date de dépôt: 22.01.2020
(51) Int. Cl.: H01M 8/0206, H01M 8/0258, H01M 8/0267, H01M 8/0297, H01M 8/0254

(54) **PLAQUE BIPOLAIRE POUR HOMOGENEISER LA TEMPERATURE DE LIQUIDE DE REFROIDISSEMENT**

(30) Priorité: 24.01.2019 FR 1900637
(71) Demandeur: Commissariat à l'énergie atomique et aux énergies alternatives, 75015 Paris (FR)
(72) Inventeur: POIROT-CROUVEZIER, Jean-Philippe, 38054 Grenoble cedex 9 (FR)
(74) Mandataire: Guérin, Jean-Philippe

(57) **Abrégé**

L'invention porte une plaque bipolaire (5) pour réacteur électrochimique comprenant des première et deuxième tôles conductrices (61, 62), comportant :
-des premier et deuxième collecteurs d'écoulement de fluide (596, 592) ;
-une zone réactive (619) comportant des premiers canaux d'écoulement (618), et des deuxièmes canaux d'écoulement (628) ; et
-des canaux d'écoulement de liquide de refroidissement (638) ménagés entre les première et deuxième nervures (643, 644) ;
-une première zone d'homogénéisation (614) comportant des troisièmes canaux d'écoulement (641);
-une deuxième zone d'homogénéisation (624) comportant des quatrièmes canaux d'écoulement (642) ;
-la zone réactive (619) comporte une partie médiane et une partie de liaison (6191) ménagée entre la partie médiane d'une part et les première et deuxième zones d'homogénéisation (614, 624).

## Description

L'invention concerne les réacteurs électrochimiques incluant un empilement de cellules électrochimiques, et plus particulièrement des plaques bipolaires d'un empilement avec des membranes échangeuses de protons. De tels réacteurs électrochimiques constituent par exemple des piles à combustible ou des électrolyseurs.

Les piles à combustible sont notamment envisagées comme source d'énergie pour des véhicules automobiles produits à grande échelle dans le futur ou comme sources d'énergie auxiliaire dans l'aéronautique. Une pile à combustible est un dispositif électrochimique qui convertit de l'énergie chimique directement en énergie électrique. Une pile à combustible comprend un empilement en série de plusieurs cellules. Chaque cellule génère typiquement une tension de l'ordre de 1 Volt, et leur empilement permet de générer une tension d'alimentation d'un niveau plus élevé, par exemple de l'ordre d'une centaine de volts.

Parmi les types de piles à combustible connus, on peut notamment citer la pile à combustible à membrane échangeuse de protons, dite PEM, fonctionnant à basse température. De telles piles à combustible présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, du dihydrogène utilisé comme carburant est oxydé pour produire des protons traversant la membrane. La membrane forme ainsi un conducteur ionique. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques dites bipolaires, par exemple en métal, empilées les unes sur les autres. La membrane est disposée entre deux plaques bipolaires. Les plaques bipolaires peuvent comprendre des canaux et orifices d'écoulement pour guider en continu les réactifs et les produits vers/depuis la membrane. Les plaques bipolaires alimentent en continu la zone réactive des électrodes en réactifs, au fur et à mesure de leur consommation. Les plaques bipolaires comprennent aussi des canaux d'écoulement pour guider du liquide de refroidissement évacuant la chaleur produite. Les produits de réaction et les espèces non réactives sont évacués par entraînement par l'écoulement jusqu'à la sortie des réseaux de canaux d'écoulement. Les canaux d'écoulement des différents écoulements sont séparés par l'intermédiaire des plaques bipolaires notamment.

Les plaques bipolaires sont également électriquement conductrices pour collecter des électrons générés au niveau de l'anode. Les plaques bipolaires ont également une fonction mécanique de transmission des efforts de serrage de l'empilement, nécessaire à la qualité du contact électrique. Des couches de diffusion gazeuse sont interposées entre les électrodes et les plaques bipolaires et sont en contact avec les plaques bipolaires.

Une conduction électronique est réalisée à travers les plaques bipolaires, une conduction ionique étant obtenue à travers la membrane.

On distingue principalement trois modes de circulation des réactifs dans les canaux d'écoulement :

- les canaux en serpentin : un ou plusieurs canaux parcourent l'ensemble de la surface active en plusieurs allers-retours.

- les canaux parallèles : un faisceau de canaux parallèles et traversants parcourent la surface active de part en part. Les canaux d'écoulement peuvent être rectilignes ou légèrement ondulés.

- les canaux interdigités : un faisceau de canaux parallèles et bouchés parcourt la surface active de part en part. Chaque canal est bouché soit du côté de l'entrée, soit du côté de la sortie de fluide. Le fluide entrant dans un canal est alors contraint à traverser localement la couche de diffusion gazeuse pour rejoindre un canal adjacent et ensuite atteindre la sortie de fluide de ce canal adjacent.

Pour favoriser la compacité et les performances, la conception implique de réduire les dimensions des canaux d'écoulement. Le mode de circulation par canaux parallèles est alors généralement favorisé, pour limiter les pertes de charge dans de tels canaux d'écoulement de dimensions réduites, et éviter des problèmes d'écoulement de liquide de refroidissement pouvant conduire à des points chauds.

Il est par ailleurs important d'homogénéiser les débits de réactifs sous peine d'altérer le fonctionnement du réacteur électrochimique. A cet effet, les plaques bipolaires comportant des canaux d'écoulement parallèles utilisent fréquemment des zones d'homogénéisation pour raccorder des collecteurs d'entrée et de sortie aux différents canaux d'écoulement des plaques bipolaires. Les réactifs sont amenés au contact des électrodes à partir de collecteurs d'entrée et les produits sont évacués à partir de collecteurs de sortie connectés aux différents canaux d'écoulement.

Différentes solutions techniques sont connues pour mettre en communication les collecteurs d'entrée et de sortie avec les différents canaux d'écoulement. Il est notamment connu de réaliser des passages entre deux tôles métalliques d'une plaque bipolaire. Ces passages débouchent d'une part dans des orifices d'injection, et d'autre part dans des orifices de collecteurs respectifs. Une zone d'homogénéisation comprend des canaux qui mettent en communication des orifices d'injection avec des canaux d'écoulement.

La conception avec des canaux de circulation parallèles ne permet cependant pas de garantir une homogénéité suffisante de la température au niveau de l'ensemble des canaux de la zone réactive, lors de la présence d'une telle zone d'homogénéisation. Un canal d'écoulement de la zone d'homogénéisation se subdivise en effet en plusieurs canaux d'écoulement de la zone réactive. Les nervures délimitant les canaux d'écoulement de la zone réactive forment des canaux d'écoulement de liquide de refroidissement. Du fait de la subdivision, certaines nervures/canaux d'écoulement de liquide de refroidissement sont mal alimentés par le liquide de refroidissement provenant de la zone d'homogénéisation.

Il existe un besoin pour une plaque bipolaire à doubles tôles métalliques permettant d'homogénéiser la température du liquide de refroidissement dans la zone réactive pour une conception à canaux d'écoulement de réactif parallèles, et ce sans accroître excessivement la perte de charge de l'écoulement de liquide de refroidissement.

L'invention vise à résoudre un ou plusieurs de ces inconvénients. L'invention porte ainsi sur une plaque bipolaire pour réacteur électrochimique comprenant des première et deuxième tôles conductrices, tel que défini dans les revendications annexées.

L'invention porte également sur les variantes des revendications dépendantes. L'homme du métier comprendra que chacune des caractéristiques de la description ou des revendications dépendantes peut être combinée indépendamment aux caractéristiques d'une revendication indépendante, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :
[Fig.1] est une vue en perspective éclatée d'un exemple d'empilement d'assemblages membrane/électrodes et de plaques bipolaires pour une pile à combustible ;
[Fig.2] est une vue en perspective éclatée de plaques bipolaires et d'un assemblage membrane/électrodes destinés à être empilés pour former des collecteurs d'écoulement à travers l'empilement ;
[Fig.3] est une vue partielle schématique de dessus d'une face d'une plaque bipolaire pour un premier réactif ;
[Fig.4] est une vue partielle schématique de dessus par transparence d'une face d'une plaque bipolaire pour un deuxième réactif ;
[Fig.5] est une vue schématique de dessus d'une partie d'une plaque bipolaire résultant de la superposition des faces décrites en figures 3 et 4 ;
[Fig.6] est une vue en coupe d'un empilement incluant des plaques bipolaires, au niveau d'une zone d'homogénéisation ;
[Fig.7] est une vue partielle schématique de dessus d'une face d'une plaque bipolaire pour un premier réactif selon un premier mode de réalisation de l'invention ;
[Fig.8] est une vue partielle schématique de dessus par transparence d'une face d'une plaque bipolaire pour un deuxième réactif selon un premier mode de réalisation de l'invention ;
[Fig.9] est une vue de dessus schématique d'une partie d'une plaque bipolaire selon un premier mode de réalisation de l'invention, résultant de la superposition des faces illustrées aux figures 7 et 8 ;
[Fig.10] est une vue de dessus partielle schématique d'une face d'une plaque bipolaire pour un premier réactif selon un second mode de réalisation de l'invention ;
[Fig.11] est une vue de dessus schématique d'une partie d'une plaque bipolaire selon un second mode de réalisation de l'invention.

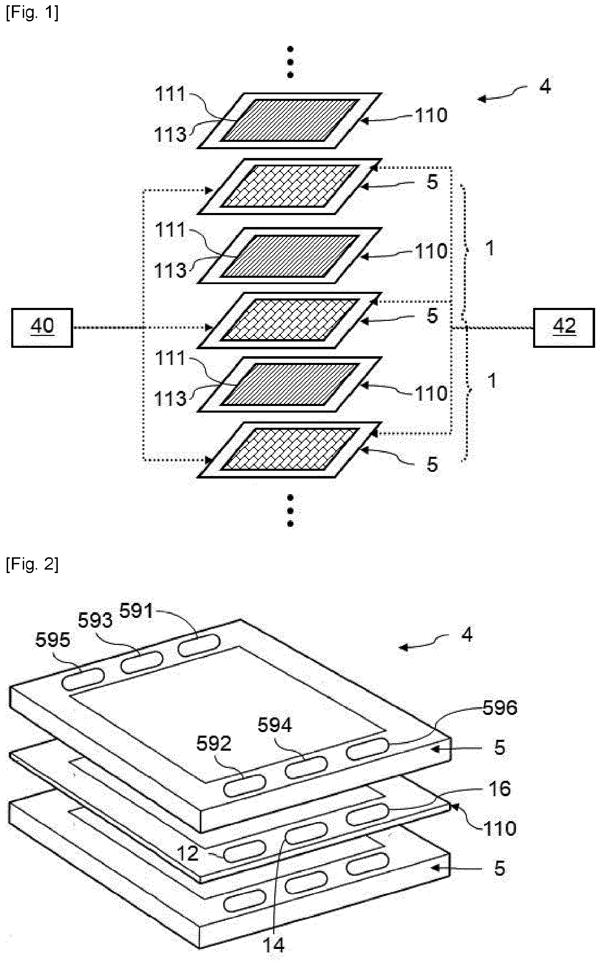

La figure 1 est une vue en perspective éclatée schématique d'un empilement de cellules 1 d'une pile à combustible 4. La pile à combustible 4 comprend plusieurs cellules 1 superposées. Les cellules 1 sont du type à membrane échangeuse de protons ou membrane à électrolyte polymère.

La pile à combustible 4 comprend une source de carburant 40. La source de carburant 40 alimente ici en dihydrogène une entrée de chaque cellule 1. La pile à combustible 4 comprend également une source de comburant 42. La source de comburant 42 alimente ici en air une entrée de chaque cellule 1, l'oxygène de l'air étant utilisé comme oxydant. Chaque cellule 1 comprend également des canaux d'échappement. Une ou plusieurs cellules 1 présentent également un circuit de refroidissement.

Chaque cellule 1 comprend un assemblage membrane/électrodes 110 ou AME 110. Un assemblage membrane/électrodes 110 comprend un électrolyte 113, une cathode (non illustrée) et une anode 111 placées de part et d'autre de l'électrolyte et fixées sur cet électrolyte 113. La couche d'électrolyte 113 forme une membrane semi-perméable permettant une conduction protonique tout en étant imperméable aux gaz présents dans la cellule. La couche d'électrolyte empêche également un passage des électrons entre l'anode 111 et la cathode.

Entre chaque couple d'AME adjacents, une plaque bipolaire 5 est disposée. Chaque plaque bipolaire 5 définit des canaux d'écoulement anodiques et des canaux d'écoulement cathodiques sur des faces externes opposées. Des plaques bipolaires 5 définissent avantageusement également des canaux d'écoulement de liquide de refroidissement entre deux assemblages membrane/électrodes successifs. Les plaques bipolaires 5 peuvent être formées chacune de façon connue en soi à partir de deux tôles métalliques conductrices assemblées, par exemple en acier inoxydable, ou en alliage de titane, en alliage d'aluminium, en alliage de nickel ou en alliage de tantale. Chaque tôle définit alors une face externe respective. Les plaques bipolaires 5 peuvent également être obtenues par tout autre procédé, par exemple le moulage ou l'injection à partir de composites carbone-polymère. Les plaques bipolaires 5 peuvent ainsi également être formées d'un seul tenant. Les faces externes de la plaque bipolaire 5 sont alors définies par une telle pièce d'un seul tenant.

L'empilement peut également comprendre des joints d'étanchéité périphériques et des renforts de membrane non illustrés ici. Chaque cellule 1 peut en outre comprendre une couche de diffusion de gaz (non illustrée) disposée entre l'anode et une plaque bipolaire, et une autre couche de diffusion de gaz disposée entre la cathode et une autre plaque bipolaire.

De façon connue en soi, durant le fonctionnement de la pile à combustible 4, de l'air s'écoule entre une AME et une plaque bipolaire, et du dihydrogène s'écoule entre cette AME et une autre plaque bipolaire. Au niveau de l'anode, le dihydrogène est oxydé pour produire des protons qui traversent l'AME. Les électrons produits par cette réaction sont collectés par une plaque bipolaire 5. Les électrons produits sont ensuite appliqués sur une charge électrique connectée à la pile à combustible 1 pour former un courant électrique. Au niveau de la cathode, de l'oxygène est réduit et réagit avec les protons pour former de l'eau.

Durant son fonctionnement, une cellule de la pile à combustible génère usuellement une tension continue entre l'anode et la cathode de l'ordre de 1V.

La figure 2 est une vue en perspective éclatée schématique de deux plaques bipolaires 5 et d'un assemblage membrane/électrodes destinés à être inclus dans l'empilement de la pile à combustible 4. L'empilement des plaques bipolaires 5 et des assemblages membrane/électrodes 110 est destiné à former une pluralité de collecteurs d'écoulement, dont la disposition est illustrée ici uniquement de manière schématique. À cet effet, des orifices respectifs sont ménagés à travers les plaques bipolaires 5 et à travers les assemblages membrane/électrodes 110. Les plaques bipolaires 5 comportent ainsi des orifices 591, 593 et 595 au niveau d'une première extrémité, et des orifices 592, 594 et 596 au niveau d'une deuxième extrémité opposée à la première. L'orifice 596 sert par exemple pour former un collecteur d'alimentation en carburant, l'orifice 595 sert par exemple pour former un collecteur d'évacuation de résidus de combustion et de carburant non utilisé, l'orifice 593 sert par exemple pour former un collecteur d'alimentation en liquide de refroidissement, l'orifice 594 sert par exemple pour former un collecteur d'évacuation de liquide de refroidissement, l'orifice 591 sert par exemple pour former un collecteur d'alimentation en comburant, et l'orifice 592 sert par exemple pour former un collecteur d'évacuation d'eau produite et de comburant non utilisé.

Les orifices des plaques bipolaires 5 et des assemblages membrane/électrodes 110 sont disposés en vis-à-vis afin de former les différents collecteurs d'écoulement. Des orifices 12, 14 et 16 sont par exemple ménagés dans les assemblages membrane/électrodes 110 et sont disposés en vis-à-vis respectivement des orifices 592, 594 et 596. Dans un but de simplification, l'orifice 596 sera assimilé à un collecteur d'alimentation en carburant de l'empilement.

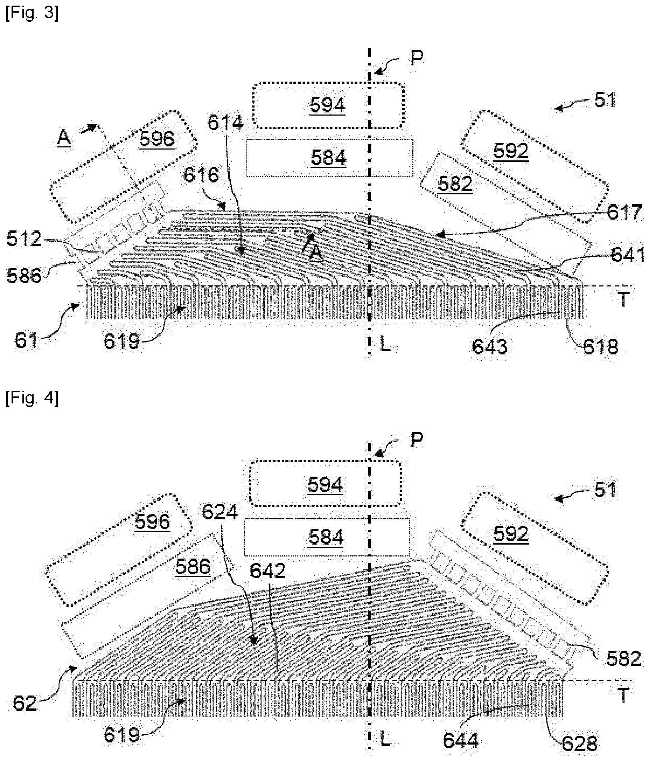

La figure 3 est une vue schématique partielle de dessus d'une tôle conductrice 61 définissant une face externe anodique d'un exemple de mise en œuvre d'une plaque bipolaire 51, au niveau des collecteurs 592, 594 et 596. La figure 4 est une vue schématique partielle de dessus par transparence d'une tôle conductrice 62 définissant une face externe cathodique d'un exemple de mise en œuvre d'une même plaque bipolaire 51, au niveau des collecteurs 592, 594 et 596.

Les tôles conductrices 61 et 62 sont en relief, de façon à ménager des canaux d'écoulement de fluide au niveau des faces externes de la plaque bipolaire 51, et des canaux d'écoulement de liquide de refroidissement entre les faces internes des tôles conductrices 61 et 62 de cette plaque bipolaire 51. Ainsi, pour chaque plaque bipolaire, des canaux d'écoulement de carburant 618 délimités par des parois latérales de nervures 643 sont ménagés sur une face externe de la tôle 61, et des canaux d'écoulement de comburant et d'eau 628 délimités par des parois latérales de nervures 644 sont ménagés sur une face externe de la tôle 62. Les tôles conductrices 61 et 62 sont avantageusement réalisées en acier inoxydable, matériau conducteur très courant et adapté à de nombreux procédés de transformation industriels largement répandus. Selon un mode de réalisation de l'invention, les reliefs des tôles conductrices 61 et 62 sont ainsi par exemple obtenus par emboutissage, typiquement un emboutissage d'un métal conducteur.

Les premiers canaux d'écoulement de carburant 618 sont ici de type parallèle et s'étendent selon une même direction longitudinale, correspondant à la ligne en tiret-point L. Les canaux d'écoulement 618 sont disposés dans une zone dite réactive 619. La direction longitudinale L correspond à la direction d'écoulement de fluide. Les canaux d'écoulement de comburant 628 sont également avantageusement de type parallèle et s'étendent selon une même direction L. Ils sont disposés dans la zone réactive 619. Les canaux de liquide de refroidissement 638 sont également avantageusement de type parallèle. Les canaux 638 de liquide de refroidissement sont ici rectilignes et s'étendent selon une même direction L. Des canaux rectilignes 638 permettent de limiter les pertes de charge pour les réactifs et le liquide de refroidissement dans la zone réactive 618. Ces différents canaux d'écoulement 618 et 628 ne sont pas nécessairement rectilignes (ces canaux peuvent présenter une ondulation), leur direction longitudinale étant définie par la droite L reliant leur entrée à leur sortie. Ces différents canaux d'écoulement 618, 628 ne présentent ainsi pas de point de rebroussement par rapport à la direction d'écoulement L à travers la zone réactive 619.

De façon connue en soi, les différents collecteurs traversant l'empilement communiquent avec des zones d'injection respectives. Dans l'exemple illustré aux figures 3 et 4, le collecteur 596 communique avec une zone d'injection 586, le collecteur 594 communique avec une zone d'injection 584 et le collecteur 592 communique avec une zone d'injection 582. Chaque zone d'injection comporte des orifices d'injection respectifs en communication avec des canaux d'écoulement respectifs. Les zones d'injection 586, 584 et 582 sont décalées latéralement. Les zones d'injection 582 et 586, comprenant des orifices d'injection respectifs, sont notamment disposées de part et d'autre d'un plan P perpendiculaire à leur plaque bipolaire et incluant la direction L des canaux d'écoulement 618 et 628, de façon à pouvoir loger plusieurs collecteurs au niveau d'une même extrémité d'une plaque bipolaire.

Les orifices d'injection 512 de la zone d'injection 586 communiquent avec les canaux d'écoulement 618 de la zone réactive 619 par l'intermédiaire d'une zone d'homogénéisation 614. Cette zone d'homogénéisation 614 comporte des troisièmes canaux d'écoulement 641 sur la face externe de la tôle 61. Une droite T, perpendiculaire à la direction d'écoulement de fluide L, illustre ici la délimitation entre la zone réactive 619 et la zone d'homogénéisation 614.

La zone d'homogénéisation 614 est scindée en une aire d'homogénéisation 616 et une aire d'homogénéisation 617. L'aire d'homogénéisation 616 forme un premier tronçon et comporte des canaux d'écoulement d'homogénéisation dans lesquels débouchent les orifices d'injection 512. Dans cette aire 616, les canaux d'écoulement 641 sont répartis selon ladite direction T. Chaque canal d'écoulement de l'aire 616 met en communication au moins un orifice 512 avec au moins 2 canaux d'écoulement de l'aire 617. Cette subdivision permet de réaliser une première homogénéisation des pressions du fluide anodique.

L'aire d'homogénéisation 617 forme un deuxième tronçon comportant des branches débouchant dans des canaux d'écoulement 618. Chaque canal d'écoulement de l'aire 617 communique avec au moins deux premiers canaux d'écoulement 618 de la zone réactive 619. Cette subdivision permet de réaliser une deuxième homogénéisation des pressions du fluide anodique. La scission de la zone d'homogénéisation 614 en deux aires distinctes 616 et 617 permet d'incliner fortement les canaux d'écoulement 641 de l'aire 616 par rapport aux canaux d'écoulement 618, pour favoriser le placement de plusieurs collecteurs d'écoulement à une même extrémité de la plaque bipolaire 51. L'alimentation de plusieurs canaux d'écoulement 618 par un même canal d'écoulement 641 permet de façon générale d'augmenter la compacité de la zone d'homogénéisation 614.

Avantageusement, une zone d'homogénéisation 624 représentée en figure 4, est ménagée sur la face externe de la tôle 62, pour mettre en communication des orifices d'injection de la zone d'injection 582 avec des canaux d'écoulement 628 de cette face externe dans la zone réactive 619. Les canaux d'écoulement 628 sont séparés les uns des autres par des parois latérales de nervures 644. Avantageusement, la zone d'homogénéisation 624 est positionnée (au moins partiellement) en superposition avec la zone d'homogénéisation 614.

De façon similaire, la zone d'homogénéisation 624 comprend des canaux d'écoulement 642. Chaque canal d'écoulement 642 met en communication au moins un orifice d'injection de la zone 582 avec plusieurs canaux d'écoulement 628.

Une zone d'homogénéisation 614 ou 624 se différencie généralement de la zone réactive 619 incluant les canaux d'écoulement 618 ou 628 :
- par l'absence d'électrode surplombant cette zone d'homogénéisation dans l'assemblage membrane-électrodes ; et/ou
- par la présence de canaux d'homogénéisation présentant une inclinaison par rapport à la direction L des canaux d'écoulement 618 et 628, de façon à rendre les zones d'homogénéisation 614 et 624 plus compactes.

La fonction des zones d'homogénéisation 614 et 624 est notamment de limiter les différences de débit entre les différents canaux d'écoulement 618 et 628 respectivement, et d'homogénéiser les pertes de charge pour les différents chemins d'écoulement possibles entre un collecteur d'entrée et un collecteur de sortie, pour le réactif considéré.

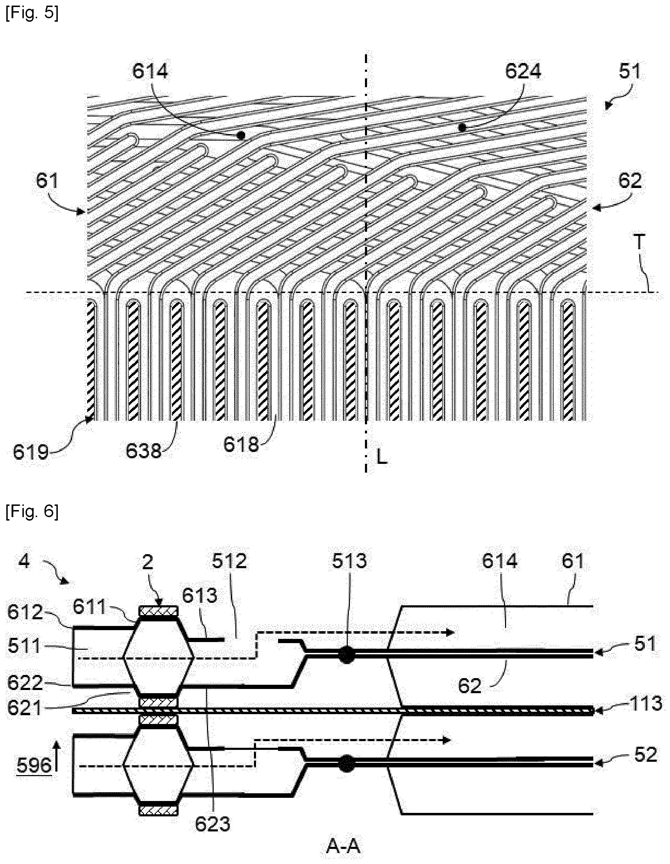

La figure 5 est une vue de dessus schématique par transparence de la superposition de la tôle conductrice 61 et de la tôle conductrice 62 d'une plaque bipolaire 51. La zone illustrée inclut notamment une partie de la zone d'homogénéisation 614, et une liaison avec la zone réactive au niveau de la droite T. Des canaux d'écoulement de liquide de refroidissement sont formés dans les espaces résultants de la superposition des tôles 61 et 62, dans la zone réactive. Le liquide de refroidissement circule dans l'espace résultant des canaux ménagés sur les faces internes des tôles 61 et 62.

Dans le cas où des canaux 618 et 628 d'écoulement des réactifs dans la zone réactive 619 se retrouvent exactement superposés, ils délimitent des canaux d'écoulement de liquide de refroidissement 638 qui ne communiquent pas avec les canaux d'écoulement de liquide de refroidissement adjacents dans la zone réactive 619. Le liquide de refroidissement ne peut alors pas s'écouler de façon homogène dans les différents canaux 638. Il en résulte une baisse de la performance du réacteur électrochimique, le refroidissement de la zone réactive n'étant pas optimal.

La figure 6 est une vue en coupe d'une plaque bipolaire 51, empilée avec une autre plaque bipolaire identique 52, et entre lesquelles une membrane 113 d'un assemblage membrane/électrodes est disposée. La vue représentée ici correspond à la coupe A-A de la figure 3, au niveau du collecteur 596 d'alimentation en carburant.

Chacune des plaques bipolaires 51 et 52 illustrées inclut deux tôles conductrices 61 et 62, telles que détaillées précédemment, solidarisées par l'intermédiaire de soudures 513.

Les orifices d'injection 512 sont ménagés dans la tôle 61 dans la zone d'injection 586. Ces orifices 512 communiquent avec le collecteur 596 par l'intermédiaire d'un passage 511 :
- traversant des nervures 612 et 622 ;
- traversant des nervures 611 et 621 de support de joints 2, les nervures 611 et 621 entourant le collecteur 596 ; et
- traversant des nervures 613 et 623.

Les nervures 612 et 613 sont ménagées de part et d'autre de la nervure 611 dans la tôle 61, les nervures 622 et 623 étant ménagées de part et d'autre de la nervure 621 dans la tôle 62.

Des communications de fluide non détaillées et non illustrées sont également ménagées d'une part entre le collecteur 594 et la zone d'injection 584, et d'autre part entre le collecteur 592 et la zone d'injection 582.

L'invention propose d'homogénéiser les températures du liquide de refroidissement circulant dans les canaux de liquide de refroidissement délimités entre deux nervures en vis-à-vis des tôles conductrices 61 et 62, dans la zone réactive 619. Selon l'invention, la zone réactive 619 comporte une partie médiane et une partie de liaison ménagée entre cette partie médiane et une zone d'homogénéisation. Dans la partie médiane, chaque nervure se superpose avec une unique nervure en vis-à-vis, ce qui permet de réduire les pertes de charge de l'écoulement de liquide de refroidissement. Dans la partie de liaison, chaque nervure se superpose au moins partiellement avec une autre nervure avec laquelle elle ne se superpose pas dans la partie médiane. Ainsi, une même nervure dans la zone réactive 619 est en communication avec au moins deux nervures en vis-à-vis pour permettre d'alimenter davantage de canaux de liquide de refroidissement, et ce sans altérer excessivement la perte de charge pour l'écoulement du liquide de refroidissement.

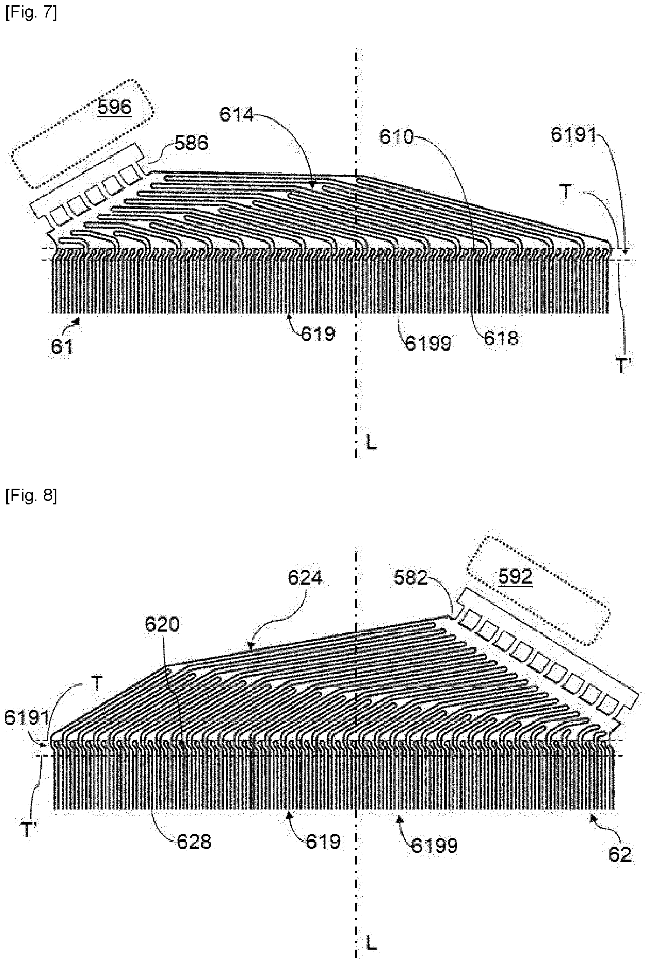

Une vue de dessus schématique d'une zone d'homogénéisation 614 d'une tôle 61 pour un premier réactif selon un premier mode de réalisation de l'invention est détaillée figure 7. La figure 8 représente une vue de dessus schématique par transparence d'une zone d'homogénéisation 624 d'une tôle 62 pour un deuxième réactif, selon un premier mode de réalisation de l'invention.

Une droite T', parallèle à la droite T décrite précédemment, est située dans la zone réactive 619 à proximité de la droite T. La droite T' illustre une délimitation entre une partie de liaison 6191 et une partie médiane 6199 de la zone réactive 619. La partie de liaison 6191 est ainsi disposée entre lesdites droites T et T'.

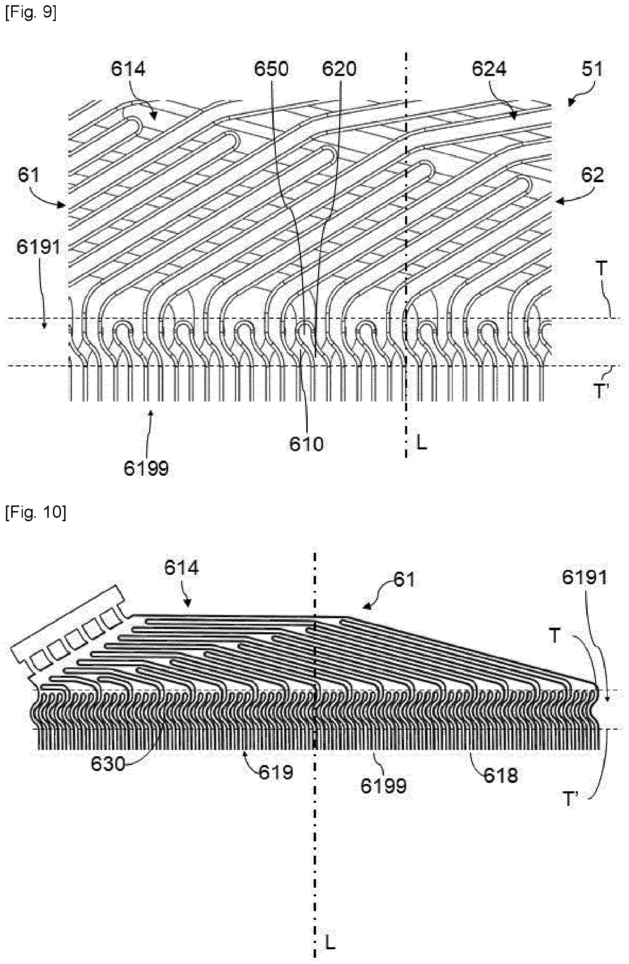

Selon le premier mode de réalisation de l'invention illustré aux figures 7 et 8, les canaux 618 et 628 sont incurvés selon la direction transversale T, et donc incurvés par rapport à la direction L, au niveau de leur extrémité située dans ladite partie de liaison 6191. Dans la partie de liaison 6191, les canaux 618 présentent une partie coudée 610. Dans la partie de liaison 6191, les canaux 628 présentent une partie coudée 620. Comme illustré à la figure 9, les parties coudées 610 et 620 sont incurvées selon des directions opposées. La partie coudée 610 d'un canal 618 vient se superposer au niveau d'une zone de recouvrement 650, avec la partie coudée 620 d'un canal 628 adjacent. La zone de recouvrement 650 est disposée à un demi-pas nervure-canal (le pas nervure-canal est la somme de la largeur d'un canal d'écoulement 618 ou 628 et de la largeur d'une nervure 643 ou 644) selon la direction transversale. Au niveau de la zone de recouvrement 650, une partie coudée 610 d'un canal 618 communique avec une partie coudée 620 d'un canal 628.

Dans la partie médiane 6199 de la zone réactive 619, chaque canal d'écoulement 618 se superpose avec un et un seul canal d'écoulement 628. On limite ainsi les pertes de charge pour l'écoulement du liquide de refroidissement dans la zone réactive 619. Dans la partie de liaison 6191, un canal d'écoulement 618 vient en superposition avec un canal d'écoulement 628 au niveau de la zone de recouvrement 650, alors qu'il ne se superpose pas avec ce canal 628 dans la partie médiane 6199. Ainsi, deux canaux d'écoulement de liquide de refroidissement adjacents de la partie médiane 6199 peuvent être mis en communication au niveau de la partie de liaison 6191. On limite ainsi les disparités de débits de liquide de refroidissement en fonction de la position transversale dans la zone réactive 619, en évitant de créer des canaux de liquide de refroidissement non alimentés dans la zone réactive 619.

La figure 9 détaille une partie d'une plaque bipolaire 51 résultant de la superposition des tôles 61 et 62, selon un premier mode de réalisation de l'invention, au niveau d'une zone de liaison 6191. En réalisant des parties coudées 610 et 620 sur les faces externes des tôles 61 et 62 dans deux directions opposées, on crée les zones de recouvrement 650 et on crée ainsi des croisements entre des canaux 638 adjacents. Ces croisements permettent l'accès du liquide de refroidissement à tous les canaux 638 de la zone réactive 619. Ces croisements assurent un brassage du fluide de refroidissement plus efficace, ce qui permet d'obtenir des performances de refroidissement optimales avec un refroidissement plus homogène.

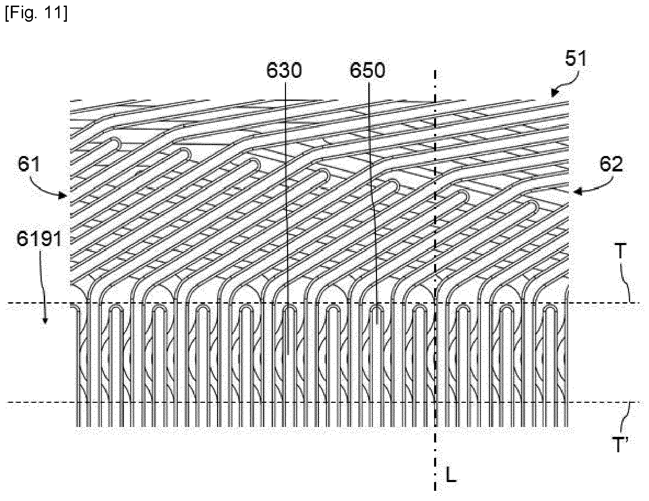

Une vue de dessus schématique d'une zone d'homogénéisation 614 d'une tôle 61 pour un premier réactif selon un second mode de réalisation de l'invention est illustrée à la figure 10. Comme illustré à la figure 11, dans la partie médiane 6199 de la zone réactive 619, chaque canal d'écoulement 618 se superpose avec un et un seul canal d'écoulement 628. On limite ainsi les pertes de charge pour l'écoulement du liquide de refroidissement dans la zone réactive 619.

Les canaux 618 sont incurvés selon la direction T, par rapport à la direction L, dans la partie de liaison 6191. Les canaux 618 présentent ainsi chacun un méandre 630 dans la partie de liaison 6191. Le méandre 630 induit un décalage d'un pas nervure-canal pour un canal 618 dans la partie de liaison 6191. Du fait de ce décalage, un canal 618 crée une zone de recouvrement 650 avec un canal 628, avec lequel il ne vient pas en superposition dans la partie médiane 6199. Ainsi, deux canaux d'écoulement de liquide de refroidissement adjacents de la partie médiane 6199 peuvent être mis en communication au niveau de la partie de liaison 6191. Une telle configuration permet l'utilisation de canaux 628 sans courbure, de façon à ne pas augmenter la perte de charge dans ces canaux. On limite aussi les disparités de débits de liquide de refroidissement en fonction de la position transversale dans la zone réactive 619, en évitant de créer des canaux de liquide de refroidissement non alimentés dans la zone réactive 619.

L'invention a été décrite en référence à une pile à combustible. L'invention peut également s'appliquer à d'autres types de réacteurs électrochimiques, par exemple des électrolyseurs.

## Revendications

1. Plaque bipolaire (5) pour réacteur électrochimique comprenant des première et deuxième tôles conductrices (61, 62), **caractérisée en ce qu'**elle comporte :
- des premier et deuxième collecteurs d'écoulement de fluide (596, 592) ;
- une zone réactive (619) comportant des premiers canaux d'écoulement (618) sur la face externe de la première tôle (61), lesdits premiers canaux d'écoulement étant délimités par des premières nervures (643) et s'étendant selon une direction longitudinale (L) à travers la zone réactive (619), et comportant des deuxièmes canaux d'écoulement (628) sur la face externe de la deuxième tôle (62), lesdits deuxièmes canaux d'écoulement étant délimités par des deuxièmes nervures (644) et s'étendant selon la direction longitudinale (L) à travers la zone réactive (619) ; et
- des canaux d'écoulement de liquide de refroidissement (638) ménagés entre les première et deuxième nervures (643, 644) ;
- une première zone d'homogénéisation (614) comportant des troisièmes canaux d'écoulement (641) sur la face externe de la première tôle (61), plusieurs des premiers canaux d'écoulement étant connectés au premier collecteur d'écoulement de fluide (596) par l'intermédiaire d'un même troisième canal d'écoulement de la première zone d'homogénéisation (614);
- une deuxième zone d'homogénéisation (624) comportant des quatrièmes canaux d'écoulement (642) sur la face externe de la deuxième tôle (62), plusieurs des deuxièmes canaux d'écoulement étant connectés au deuxième collecteur d'écoulement de fluide (592) par l'intermédiaire d'un même quatrième canal d'écoulement de la deuxième zone d'homogénéisation (624) ;
- dans laquelle la zone réactive (619) comporte une partie médiane, et comporte une partie de liaison (6191) ménagée entre la partie médiane d'une part et les première et deuxième zones d'homogénéisation (614, 624) d'autre part, chaque première nervure se superposant avec une unique deuxième nervure dans la partie médiane (6199), et au moins une première nervure recouvre, dans la partie de liaison (6191), une partie d'une deuxième nervure avec laquelle elle ne se superpose pas dans ladite partie médiane (6192).

2. Plaque bipolaire (5) selon la revendication 1, dans laquelle lesdits canaux d'écoulement de liquide de refroidissement sont des canaux parallèles s'étendant sans point de rebroussement à travers la zone réactive (619).

3. Plaque bipolaire (5) pour réacteur électrochimique selon la revendication 1 ou 2, dans laquelle lesdites premières et deuxièmes nervures sont rectilignes dans ladite partie médiane (6199) de la zone réactive (619).

4. Plaque bipolaire (5) pour réacteur électrochimique selon l'une quelconque des revendications précédentes, dans laquelle lesdites première et deuxième tôles (61, 62) sont des tôles embouties dont des reliefs définissent lesdits canaux d'écoulement et lesdites nervures (643, 644).

5. Plaque bipolaire (5) pour réacteur électrochimique selon la revendication 4, dans laquelle lesdites tôles (61, 62) sont en métal conducteur.

6. Plaque bipolaire (5) pour réacteur électrochimique selon l'une quelconque des revendications précédentes, dans laquelle lesdits premiers canaux d'écoulement (618) sont des canaux d'écoulement anodiques.

7. Plaque bipolaire (5) pour réacteur électrochimique selon l'une quelconque des revendications précédentes, dans laquelle lesdits premiers canaux d'écoulement (618) et lesdits deuxièmes canaux d'écoulement (628) sont incurvés dans la partie de liaison (6191) de la zone réactive (619) selon une direction (T) transversale perpendiculaire à la direction (L) longitudinale, lesdits premiers et deuxièmes canaux d'écoulement étant incurvés selon des sens opposés.

8. Plaque bipolaire (5) pour réacteur électrochimique selon l'une quelconque des revendications 1 à 6, dans laquelle lesdits premiers canaux d'écoulement (618) sont incurvés selon une direction transversale perpendiculaire à la direction longitudinale dans ladite partie de liaison (6191) de la zone réactive (619) et dans laquelle lesdits deuxièmes canaux d'écoulement (628) sont rectilignes dans la partie de liaison (6191) de la zone réactive (619).
